# EUROPEAN PATENT SPECIFICATION

(11) **EP 1 571 788 B1**
(45) Date of publication and mention of the grant of the patent: **27.12.2006**
(21) Application number: 04380292.5
(22) Date of filing: 30.12.2004
(51) Int. Cl.: H04L 12/46

(54) **System of monitoring and control of elements of a vehicle**
System zur Überwachung und Steuerung von Elementen eines Fahrzeugs
Système de surveillance et de contrôle des éléments d'un véhicule

(30) Priority: 05.03.2004 ES 200400542 P
(43) Date of publication of application: 07.09.2005
(73) Proprietor: Seat, S.A., 08040 Barcelona (ES); Universitat Politecnica de Catalunya, 08034 Barcelona (ES)
(72) Inventor: Del Rio Fernandez, Joaquin CTVG, 08800 Vilanova i la Geltrú - Barcelona (ES); Jimenez Bargallo, José Antonio, 08760 Martorell Barcelona (ES); Manuel Lazaro, Antonio, 08760 Martorell Barcelona (ES)
(74) Representative: Carvajal y Urquijo, Isabel

(56) References cited:
- WO-A-00/60842
- US-A1- 2002 034 180
- US-B1- 6 654 355

## Description

### FIELD OF THE INVENTION

The invention is encompassed within the field of data capture from a bus, especially in the automotive field, for the study of data related to vehicle systems and subsystems.

### BACKGROUND OF THE INVENTION

Vehicles, for example automobiles, currently comprise increasingly complex systems necessary for the correct operation of the automobile. Systems, such as for example the electrical system, are constituted by devices and subsystems that can communicate among each other and/or with one or several control units via communication means that usually include as a data and message transmission path, a bus, frequently a CAN (Controller Area Network) bus.

In order to analyze the operation of the different systems, subsystems and devices forming an automobile, it is typical to capture signals related to said subsystems and devices by means of sensors specifically provided to this end. It is also typical to capture the data and messages traveling through the bus (usually a CAN bus) as this data usually includes information related to the subsystems and devices interconnected with the bus.

The CAN (Controller Area Network) bus is widely used in different industrial fields and in particular in the automotive world, and there is a variety of devices that allow analyzing the data and messages traveling through the bus. Most of these devices are cards with different formats (PCI, PCMCIA, PXI, etc.) that are inserted in a personal computer or rack, where the data analysis is carried out in the equipment itself.

This way of carrying out the interaction between a personal computer and a bus (for example, a CAN bus through which data and messages that must be analyzed circulate) may work in a satisfactory manner in small installations, wherein the same personal computer is always used for data analysis. However, this way of carrying out the interaction is not satisfactory in situations in which carrying out the analysis of the data and interacting with the data from any of a plurality of computers is desired. For example, currently, the analysis of the behaviors of the subsystems and devices that are part of automobiles is a complex process in which a lot of times many different people take part. Thus, in accordance with the state of the art, so that each person may access the bus from his/her personal computer, it may be necessary to provide each personal computer with a card of the abovementioned type. However, this solution is not ideal, as it entails a high cost (related to obtaining and installing each card) and low flexibility (given that, for a person to access the bus from his/her personal computer, he/she first needs that the necessary card is installed for the access).

WO-00/60842-A discloses a system and a method for especially graphically monitoring and/or remote controlling stationary and/or mobile devices, especially vehicles; the monitoring is carried out from a centre by means of a signalling device. The mobile device is provided with a first function block for detecting measuring values, monitoring and/or giving an alarm according to rules which can be given and a second function block for storing application-specific data of the mobile device. The centre and the mobile device are provided with means for communicating via at least two communications channels. The first communications channel is provided for communicating between a communications server of the centre, and the second function block of the mobile device and the second communications channel is provided for communicating between a visualising system of the centre and the second function block of the mobile device.

US-6654355 discloses a method and apparatus for communicating a controller area network CAN message between a sending node, attached to a sending CAN network, and a receiving node, where the sending and receiving nodes are interconnected by a network communicating according to transmission control protocol/Intemet protocol TCP/IP. The invention basically provides a bridge for CAN to TCP/IP connection.

Thus, it has been deemed desirable to develop a system that allows a person to access the data circulating through the bus from his/her personal computer without needing to have a special card installed in the computer.

### DESCRIPTION OF THE INVENTION

In accordance with the invention, this is achieved by making use of the fact that, in current work environments, normally the people in a work unit, department, workplace or company usually work with personal computers or the like connected to, for example, an Ethernet, LAN (Local Area Network) or Internet network.

The invention relates to a system of monitoring and control of elements of a vehicle connected to a bus (for example, a CAN bus), characterized in that the system comprises:
I) a first interface (for example, a preferably programmable hardware interface) configured to be connected to the bus and to a computer network and which comprises:
   - means of capture of data circulating through the bus;
   - means for transmitting said data to a second interface (preferably a software application that is executed in a computer) via a computer network (for example, an Ethernet, LAN or Internet network);
   - means of reception of element control messages from said computer network; and
   - means of insertion of said messages in the bus, such that said messages arrive at elements of the vehicle for the control of said elements;
      and
II) said second interface, configured to be connected to said computer network and which comprises:
   - means of reception of said data from the first interface;
   - means of conversion of the format of said data, from a first format into a second format, said second format being understandable to a user connected to said computer network in accordance with the conversion rules defined in a database accessible from said second interface;
   - means of creation of messages which are suitable for the control of said elements connected to the bus, starting from instructions received via the computer network from at least one computer connected to said computer network, in accordance with configuration rules defined in said database accessible from said second interface; and
   - means of sending said messages to the first interface for their insertion in the bus.

Thereby, a user may interact from his/her computer or work station, for example from his/her personal computer, with elements of the vehicle connected to the bus via the computer network and via the first interface and second interface, both connected to the computer network. Thereby, the user does not need to use a computer provided with cards specific for communicating via a bus (for example, a CAN bus) of the vehicle, but the interaction is possible via any personal computer or work station by making use of the first interface and the second interface, which thereby and given that they are connected to the computer network, may be used by any user connected to the network. Thus, the invention allows, amongst other things, to simplify the task redistribution in a work team, as new technicians may take part in the process of analysis of a vehicle, by obtaining data from the bus of the vehicle and acting on elements connected to the bus of the vehicle, without needing to first obtain and install new specific cards in their computers and to connect said cards to the CAN bus. In the second interface, data of the first format (which may correspond to the format of the data as it travels through the bus) is converted into a second format suitable for the presentation of the relevant parameters to the user. Likewise, the second interface may receive instructions in a language used by the user and, starting from said instructions, in accordance with rules established in the database, configure messages that may be sent to the bus (via the first interface) with certain elements connected to the bus as destination and with a format that may be correctly interpreted by the elements.

The second interface may include a data server configured to carry out the conversion from the first format into the second format, and the system may include at least one computer connected to the computer network and configured to work as a client of the data server, such that the computer may request data from the data server and obtain as an answer data in the second format from the server, that is, data corresponding to those traveling through the bus but in a format understandable for the user.

Thereby, the entire infrastructure necessary for element monitoring and controlling via the bus (CAN bus) of the vehicle centers around both interfaces to which the users access from their computers via the computer network.

The data server may be, for example, an OLE for Process Control (OPC: a communication standard) server. The second interface may be configured to convert the format of the data, from the first format into the second format, by using said OLE for Process Control (OPC) protocol.

The database includes the information and rules necessary for converting data from the first format (which corresponds to the format in which the data travels through the bus) into the second format, which is the format that may be interpreted by the users and/or their computers. Likewise, the database includes the information and rules to configure messages suitable for the control of the elements connected to the bus, once injected in the bus via the first interface. These messages are configured in accordance with instructions that the second interface receives from the users, via the computer network, and following the rules and information contained in the database.

Furthermore, the system may comprise an additional system of acquisition of signals from elements of a vehicle and which comprises:
- sensors configured to be directly connected to elements of the vehicle;
- means of acquisition of signals from said sensors; and
- at least a third interface between said means of acquisition of signals and the computer network, such that information on the signals from the sensors may be derived by computers connected to the computer network via said means of acquisition of signals.

Thereby, more complete information on the vehicle may be obtained, receiving data not only from the elements connected to the bus, but also from other elements of the vehicle. For example, the sensors may be analog sensors for detecting vibrations, etc., in portions of the vehicle.

Thereby, the user may interact with the elements connected to the bus and with other elements of the vehicle from any computer (for example, a personal computer) connected to the computer network, all via the computer network and without needing to install additional hardware in his/her computer.

### BRIEF DESCRIPTION OF THE DRAWINGS

Next, a series of drawings, which aid in better understanding the invention and are expressly related to an embodiment of said invention which is presented as an illustrative and non-limiting example thereof, are described.
Figure 1 is a schematic illustration of a system in accordance with a preferred embodiment of the invention.
Figures 2A and 2B illustrate the format of the frames traveling through the CAN bus and which the first interface reads and interprets so as to send them to the second interface.
Figure 3 is a schematic block diagram of the first hardware interface 3.
Figure 4 shows a user interface as a screen configuration in the computer through which the user accesses the information.
Figure 5 is a flow chart schematically showing the operation of a software interface in accordance with a preferred embodiment of the invention.

### DESCRIPTION OF A PREFERRED EMBODIMENT OF THE INVENTION

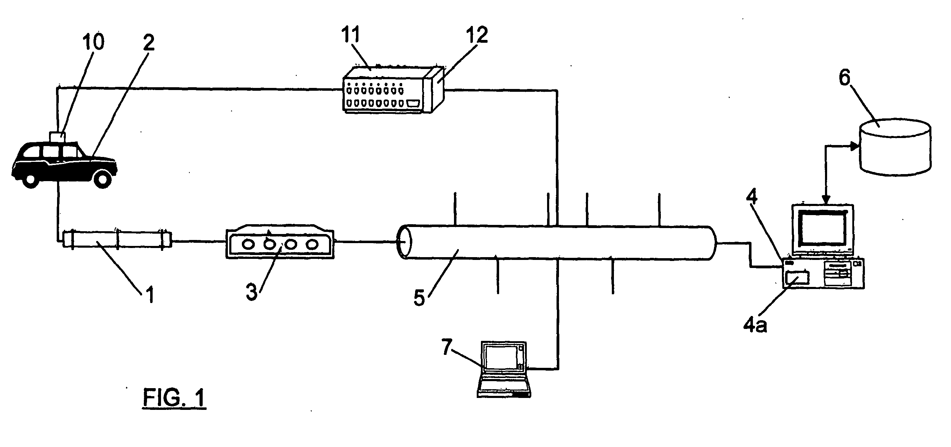

Figure 1 schematically illustrates the system in accordance with a preferred embodiment of the invention. The system is coupled to a CAN bus 1 of a vehicle 2, and comprises a first hardware interface 3, connected to the bus 1 and to a computer network 5 (for example, an Ethernet network).

The first interface 3 comprises four functional modules (not illustrated in figure 1), namely:
- means of capture of data circulating through the bus;
- means for transmitting said data to a second interface 4 (which is constituted by a software application that is executed in a computer) via the computer network 5;
- means of reception of element control messages from said computer network 5;
- and means of insertion of said messages in the bus 1, such that said messages arrive at elements of the vehicle for the control of said elements.

On the other hand, the system also comprises the second interface 4, also connected to the computer network 5 and which comprises four functional modules (not illustrated in figure 1), namely:
- means of reception of data from the first interface 3;
- means of conversion of the format of said data from a first format into a second format, in accordance with the conversion rules defined in a database 6 accessible from said second interface 4;
- means of message configuration in accordance with instructions received via the computer network 5 from at least one computer 7 connected to said computer network, in accordance with configuration rules defined in said database accessible 6 from said second interface 4; and
- means of sending said messages to the first interface 3.

Thereby, a user may interact from his/her computer 7 or work station, for example from his/her personal computer, with elements of the vehicle 2 via the bus 1, via the computer network 5, via the first interface 3 and via second interface 4.

The second interface includes a data server 4a configured to carry out the conversion from the first format into the second format. The computer 7 is configured to work as a client of the data server 4a, such that the computer 7 may request data from the data server 4a and obtain as an answer data in the second format from the server. The server 4a may be an OLE for Process Control (OPC) server, in which case, the second interface is configured to convert the format of the data, from the first format into the second format, by using the OLE for Process Control protocol.

The database includes the information and rules necessary for converting data from the first format (corresponding to the format in which the data travels through the bus 1) into the second format, which is the format that may be interpreted by the users and/or their computers. Likewise, the database includes the information and rules to configure messages suitable for the control of the elements connected to the bus, once injected in the bus via the first interface. These messages are configured in accordance with instructions that the second interface 4 receives from the users, via the computer network 5, and following the rules and information contained in the database 6. For example, a CANdb (CAN database) database from the Vector-Informatik firm, frequently used in the automotive field, may be used as database.

Furthermore, the system comprises an additional system of acquisition of signals from elements of a vehicle, which comprises:
- sensors 10 configured to be directly connected to elements of the vehicle;
- means of acquisition of signals 11 (for example, analog signals) from said sensors; and
- at least a third interface 12 between said means of acquisition of signals and the computer network, such that information on the signals from the sensors may be obtained by computers connected to the computer network via said means of acquisition of signals.

Now, the configuration and function of the relevant elements of the invention will be discussed in more detail.

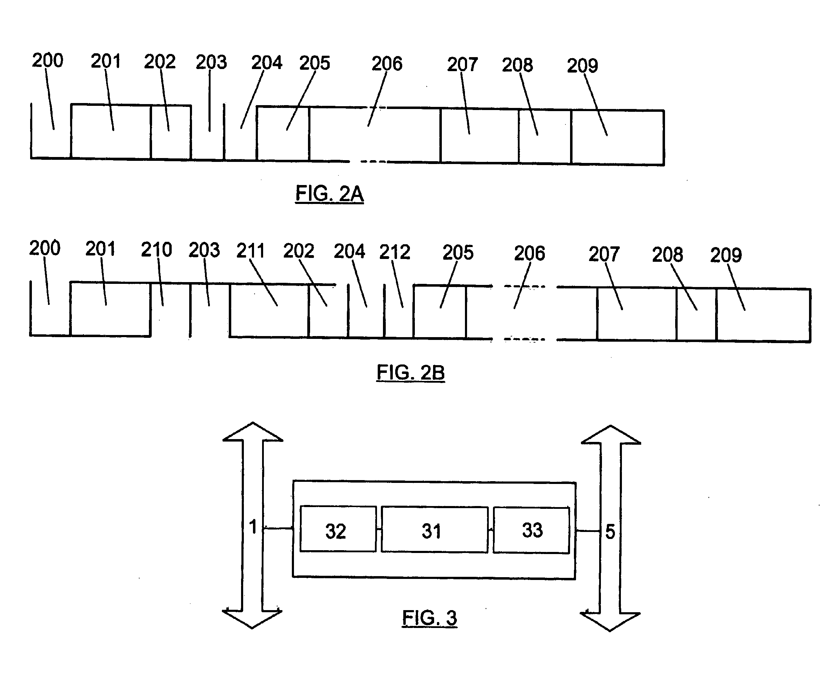

In the CAN bus, the data and messages are sent as packets or frames with a format that may be like the one illustrated in figures 2A and 2B; namely, figure 2A reflects a frame in the CAN 2.0 A format, with an 11-bit identifier (201), and figure 2B, a frame in the CAN 2.0 B format, with a 29-bit identifier (201+211).

The format of the frames is well known by any person of ordinary skill in the art, whereby it is not necessary to describe it here; basically, as known, the frames comprise the following elements:
200: "START" (1 bit)
201: "Identifier" (11 bits): the "identifier" indicating what information is contained in the frame, that is, the type of message that it is.
202: "RTR" (1 bit)
203: "IDE" (1 bit)
204: "r0" (1 bit)
205: "DLC" (4 bits)
206: "Data" (nx8 bits, where 0≤n≤8): the data field containing the information useful for the user.
207: "CRC" ("Cyclic Redundancy Check") (15 bits): a control number calculated from the original contents of the rest of the frame and intended to allow the detection and correction of errors that occur in the transmission.
208: "ACK" (2 bits)
209: "EOF+IFS" (10 bits)
210: "SRR" (1 bit): (only in the CAN 2.0 B format)
211: "Identifier" (18 bits) (only in the CAN 2.0 B format): an additional identifier field allowing to increase the information on the type of message.
212 "r1" (1 bit): (only in the CAN 2.0 B format)

The first interface 3 has a fixed configuration, that is, a configuration that never varies, it always carries out the same function. This first interface 3 constantly reads the data traveling through the CAN bus. When the second interface 4 wants to receive the data circulating through the CAN bus, the second interface 4 makes a request to the first interface 3 for this data by means of a TCP-IP (Transmission Transfer Protocol/Internet Protocol) connection. From the moment when this connection between the first interface 3 and the second interface 4 is made, the first interface 3 sends all the messages circulating through the CAN bus to the second interface 4 via the computer network by means of a TCP-IP connection. The interaction between the first interface 3, the bus 1, and the computer network 5 is always carried out under a connection request from the second interface 4 to on the first interface 3, such that the first interface 3 is always waiting to receive a connection request from the second interface 4. The parameters to be configured of the first interface 3 are, on one hand, communication parameters of the computer network (for example, the IP direction within the computer network and the gateway direction allowing access to the network), and on the other hand, communication parameters of the CAN bus (for example, the data transfer rate through the CAN bus, generally 500 kbps).

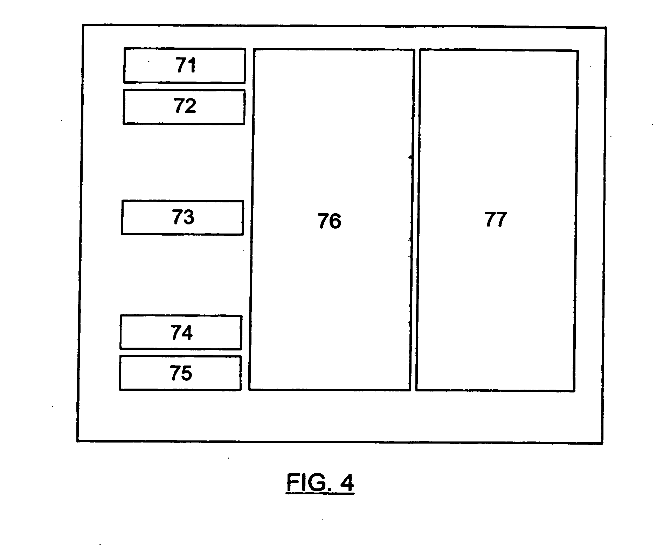

On the other hand, the second interface 4 has as an objective that the user first selects what information (CAN bus messages) he/she wants to visualize. In order to carry out this selection, the second interface 4 uses the information which is read from the database 6, where what data travels through the bus and how the data is structured within the CAN bus is reflected. The selection is made by means of two drop down menus containing which messages circulate through the CAN bus. The user selects the message he wants to display and accepts the selections by means of a push button. Figure 4 schematically shows the user interface, that is, the display on the screen of the computer 7 of the user; this interface or screen shows the following elements:
71: menu of selection of the messages circulating through the CAN bus
72: menu of selection of the signals circulating through the CAN bus
73: buttons for making the selection of the information to be displayed
74: configuration of the IP direction of the hardware interface
75: configuration of the database 6
76: displays for displaying the selected signals
77: controls for generating the CAN messages which will be sent to the first interface 3.

That is, the screen of the computer 7 of the user will show two drop down menus for choosing the messages and signals that the user wants to display and the button for making the selection. Once the selection is made, the second interface 4 makes a TCP-IP connection on the first interface 3. At this moment, all the data traveling through the CAN bus is received by the second interface 4, which is in charge of displaying only the information selected by the user.

In accordance with a preferred embodiment, the second interface 4 is programmed by using the LabVIEW^{®} programming language, which allows the user to select and display the data traveling through the CAN bus. The interface 4 is provided with an OPC data server 4a such that it allows that other computers 7 connected to the computer network that have any application that functions as an OPC client, may also display the data that had been selected in the second interface 4. This option allows using commercial software applications for monitoring the data traveling through the CAN bus using the OPC protocol.

The interface 4 also allows the user to create CAN messages according to the format defined in the database 6. The user introduces in the interface 4 the information he/she wants to send to the CAN bus in fields intended for the introduction of said information. In accordance with the rules specified in the database 6, the interface 4 generates a message that afterwards is sent periodically to the first interface 3 so as to be injected in the CAN bus. Thereby, it is possible to act on the different elements which are connected to the CAN bus.

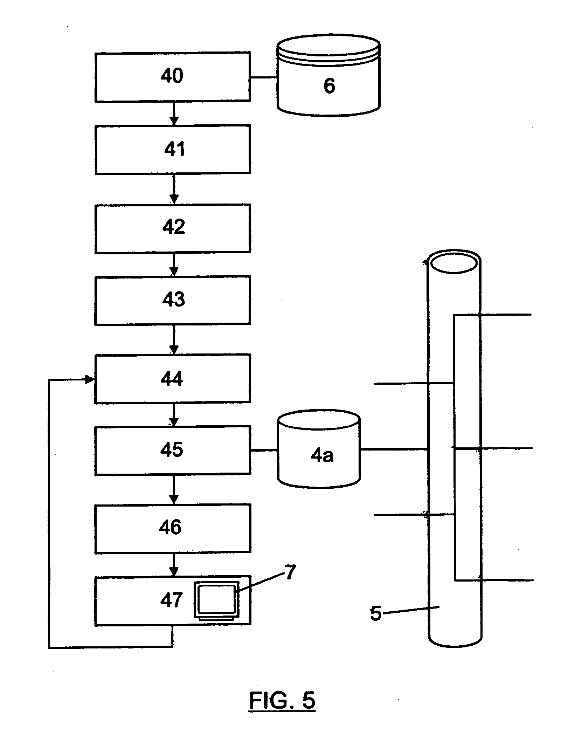

Figure 5 schematically illustrates the operation of the second interface:
40: the user configures the location of the file of the database 6 (CANdb) (a file with a DBC extension)
41: the user configures the IP direction of the first interface (hardware interface) in order to be able to establish the communication between the first interface and the software interface (software interface)
42: the software interface reads from the database the messages and signals available in the CAN bus
43: the software interface displays on screen (that is, on the screen of the computer 7 of the user), by means of drop down menus, the available messages and signals to the user
44: the user selects, by means of the drop down menus, what information (signals) from the CAN bus he/she wants to monitor
45: the user configures which messages are to be exported from the second interface to any OPC client by using the OPC protocol
46: the second interface makes a connection to the first interface in order to collect via the network 5 (Ethernet) the data (messages) from the CAN bus that the first interface reads and sends to the second interface via the network 5
47: the second interface displays on screen (in the computer 7 of the user) the information selected by the user.

The hardware interface 3 is illustrated as a block diagram in figure 3. It is an electronic system mainly based on three main elements, a microcontroller 31 which carries out the specific function for which the first interface 3 has been designed (collect data from the CAN bus 1 and send it to the computer network 5 (Ethernet)), a specific integrated circuit called CAN 32 which acts as an interpreter of the data from the CAN bus, and finally, another specific integrated circuit called Ethernet controller 33 which acts as an interface for the communication via the computer network (Ethernet).

Throughout the present description and claims, the word "comprises" and variations thereof, such as "comprising", are not intended to exclude other steps or components.

## Claims

1. A system of monitoring and control of elements of a vehicle (2) connected to a bus (1), **characterized in that** the system comprises:
I) a first interface (3) configured to be connected to the bus (1) and to a computer network (5) and which comprises:
- means of capture of data circulating through the bus (1);
- means for transmitting said data to a second interface (4) via the computer network (5);
- means of reception of element control messages from said computer network (5);
- and means of insertion of said messages in the bus (1), such that said messages arrive at elements of the vehicle for the control of said elements; and
II) said second interface (4), configured to be connected to said computer network (5) and which comprises:
- means of reception of said data from the first interface (3);
- means of conversion of the format of said data, from a first format into a second format, said second format being understandable to a user connected to said computer network, in accordance with the conversion rules defined in a database (6) accessible from said second interface (4);
- means of creation of messages which are suitable for the control of said elements connected to the bus starting from instructions received via the computer network from at least one computer (7) connected to said computer network, in accordance with configuration rules defined in said database (6) accessible from said second interface; and
- means of sending said messages to the first interface (3).

2. A system according to claim 1, **characterized in that** the second interface (4) includes a data server (4a) configured to carry out the conversion from the first format into the second format, and **in that** the system includes at least one computer (7) connected to the computer network (5) and configured to work as a client of the data server (4a), such that the computer may request data from the data server and obtain as an answer data in the second format from the server.

3. A system according to claim 2, **characterized in that** the data server (4a) is an OLE for Process Control server.

4. A system according to any of the preceding claims, **characterized in that** the second interface (4) is configured to convert the format of the data, from the first format into the second format, by using the OLE for Process Control protocol.

5. A system according to any of the preceding claims, **characterized in that** the bus (1) is a CAN bus.

6. A system according to any of the preceding claims, **characterized in that** the computer network (5) is an Ethernet network.

7. A system according to any of the preceding claims, **characterized in that** the first interface (3) is a hardware interface.

8. A system according to any of the preceding claims, **characterized in that** the second interface (4) is a software application which is executed in a computer.

9. A system according to any of the preceding claims, **characterized in that** it comprises
an additional system of acquisition of signals from elements of a vehicle and which comprises:
- sensors (10) configured to be directly connected to elements of the vehicle;
- means of acquisition of signals (11) from said sensors; y
- at least a third interface (12) between said means of acquisition of signals and the computer network, such that information on the signals from the sensors may be obtained by computers connected to the computer network via said means of acquisition of signals.

## Patentansprüche

1. System zum Überwachen und Steuern von Elementen eines Fahrzeugs (2), die mit einem Bus (1) verbunden sind,
**dadurch gekennzeichnet, dass** das System
I) eine erste Schnittstelle (3) hat, die für eine Verbindung mit dem Bus (1) und einem Rechnernetzwerk (5) gestaltet ist und
- Einrichtungen zum Erfassen von durch den Bus (1) zirkulierenden Daten,
- Einrichtungen zum Übertragen der Daten zu einer zweiten Schnittstelle (4) über das Rechnernetzwerk (5),
- Empfangseinrichtungen für Elementsteuermeldungen von dem Rechnernetzwerk (5) und
- Einrichtungen zum Einführen der Meldungen in den Bus (1) aufweist, so dass die Meldungen an Elementen des Fahrzeugs für die Steuerung dieser Elemente ankommen, und
II) dass die für die Verbindung mit dem Rechnernetzwerk (5) gestaltete zweite Schnittstelle (4)
- Empfangseinrichtungen für die Daten von der ersten Schnittstelle (3),
- Formatumwandlungseinrichtungen für die Daten von einem ersten Format in ein zweites Format, wobei das zweite Format für einen mit dem Rechnernetzwerk verbundenen Nutzer in Übereinstimmung mit den Umwandlungsregeln verständlich ist, die in einer Datenbank (6) definiert sind, die von der zweiten Schnittstelle (4) aus zugänglich ist,
- Einrichtungen zur Erzeugung von Meldungen, die für die Steuerung der mit dem Bus verbundenen Elementen ausgehend von Instruktionen geeignet sind, die über das Rechnernetzwerk von wenigstens einem mit dem Rechnernetzwerk verbundenen Rechner (7) in Übereinstimmung mit Konfigurationsregeln empfangen werden, die in der Datenbank (6) definiert sind, die von der zweiten Schnittstelle aus zugänglich ist, und
- Einrichtungen zum Senden dieser Meldungen an die erste Schnittstelle (3) aufweist.

2. System nach Anspruch 1, **dadurch gekennzeichnet, dass** die zweite Schnittstelle (4) einen Datenserver (4a) aufweist, der so gestaltet ist, dass er die Umwandlung von dem ersten Format in das zweite Format ausführt, und dass das System wenigstens einen Rechner (7) hat, der mit dem Rechnernetzwerk (5) verbunden und so gestaltet ist, dass er als Klient des Datenservers (4a) arbeitet, wodurch der Rechner Daten von dem Datenserver anfordern und als Antwort Daten im zweiten Format von dem Server erhalten kann.

3. System nach Anspruch 2, **dadurch gekennzeichnet, dass** der Datenserver (4a) ein OLE für einen Prozesssteuerungsserver ist.

4. System nach einem der vorhergehenden Ansprüche, **dadurch gekennzeichnet, dass** die zweite Schnittstelle (4) so gestaltet ist, dass sie das Datenformat von dem ersten Format in das zweite zur Verwendung des OLE für ein Prozesssteuerungsprotokoll umwandelt.

5. System nach einem der vorhergehenden Ansprüche, **dadurch gekennzeichnet, dass** der Bus (1) ein CAN-Bus ist.

6. System nach einem der vorhergehenden Ansprüche, **dadurch gekennzeichnet, dass** das Rechnernetzwerk (5) ein Ethernet-Netzwerk ist.

7. System nach einem der vorhergehenden Ansprüche, **dadurch gekennzeichnet, dass** die erste Schnittstelle (3) eine Hardwareschnittstelle ist.

8. System nach einem der vorhergehenden Ansprüche, **dadurch gekennzeichnet, dass** die zweite Schnittstelle (4) eine Softwareanwendung ist, die in einem Rechner ausgeführt wird.

9. System nach einem der vorhergehenden Ansprüche, **dadurch gekennzeichnet, dass** es ein zusätzliches Erfassungssystem für Signale von Elementen eines Fahrzeugs
- mit Sensoren (10), die für eine Direktverbindung mit den Elementen des Fahrzeugs ausgestaltet sind,
- mit Erfassungseinrichtungen für Signale (11) aus den Sensoren und
- mit wenigstens einer dritten Schnittstelle (12) zwischen der Erfassungseinrichtung für Signale und dem Rechnernetzwerk aufweist, so dass Informationen auf den Signalen aus den Sensoren von Rechnern erhalten werden können, die mit dem Rechnernetzwerk über die Erfassungseinrichtungen für Signale verbunden sind.

## Revendications

1. Système de surveillance et de contrôle des éléments d'un véhicule (2) relié à un bus (1), **caractérisé en ce que** le système comprend :
I) une première interface (3) configurée pour être connectée au bus (1) et à un réseau informatique (5) et qui comprend :
- des moyens de capture de données circulant à travers le bus (1) ;
- des moyens pour transmettre lesdites données à une deuxième interface (4) par l'intermédiaire du réseau informatique (5) ;
- des moyens de réception de messages de contrôle d'élément en provenance dudit réseau informatique (5) ; et
- des moyens d'insertion desdits messages dans le bus (1), de sorte que lesdits messages arrivent à des éléments du véhicule pour le contrôle desdits éléments ;
et
II) ladite deuxième interface (4), configurée pour être connectée au dit réseau informatique (5) et qui comprend :
- des moyens de réception desdites données en provenance de la première interface (3) ;
- des moyens de conversion du format desdites données, d'un premier format en un second format, ledit second format pouvant être compris par un utilisateur connecté au dit réseau informatique, selon les règles de conversion définies dans une base de données (6) accessible à partir de ladite deuxième interface (4) ;
- des moyens de création de messages qui sont appropriés pour le contrôle desdits éléments connectés au bus commençant par des instructions reçues par l'intermédiaire du réseau informatique à partir d'au moins un ordinateur (7) connecté au dit réseau informatique, selon les règles de configuration définies dans ladite base de données (6) accessible à partir de ladite deuxième interface ; et
- des moyens d'envoi desdits messages à la première interface (3).

2. Système selon la revendication 1, **caractérisé en ce que** la deuxième interface (4) comprend un serveur de données (4a) configuré de façon à exécuter la conversion du premier format au second format et **en ce que** le système comprend au moins un ordinateur (7) relié au réseau informatique (5) et configuré de façon à fonctionner comme un client du serveur de données (4a), de sorte que l'ordinateur puisse demander des données à partir du serveur de données et obtenir en réponse des données dans le second format à partir du serveur.

3. Système selon la revendication 2, **caractérisé en ce que** le serveur de données (4a) est un serveur de technologie OLE pour un serveur de commande de processus.

4. Système selon l'une quelconque des revendications précédentes, **caractérisé en ce que** la deuxième interface (4) est configurée de façon à convertir le format des données, du premier format au second format, en utilisant la technologie OLE pour un protocole de commande de processus.

5. Système selon l'une quelconque des revendications précédentes, **caractérisé en ce que** le bus (1) est un bus CAN.

6. Système selon l'une quelconque des revendications précédentes, **caractérisé en ce que** le réseau informatique (5) est un réseau Ethernet.

7. Système selon l'une quelconque des revendications précédentes, **caractérisé en ce que** la première interface (3) est une interface matérielle.

8. Système selon l'une quelconque des revendications précédentes, **caractérisé en ce que** la deuxième interface (4) est une application logicielle qui est exécutée dans un ordinateur.

9. Système selon l'une quelconque des revendications précédentes, **caractérisé en ce qu'**il comprend :
un système supplémentaire d'acquisition de signaux à partir des éléments d'un véhicule et qui comprend :
- des capteurs (10) configurés pour être directement reliés à des éléments du véhicule ;
- des moyens d'acquisition de signaux (11) en provenance desdits capteurs ;
- au moins une troisième interface (12) entre lesdits moyens d'acquisition de signaux et le réseau informatique, de sorte que des informations sur les signaux en provenance des capteurs puissent être obtenues par des ordinateurs connectés au réseau informatique par l'intermédiaire desdits moyens d'acquisition de signaux.
